# EUROPÄISCHE PATENTSCHRIFT

(11) **EP 1 491 872 B1**
(45) Veröffentlichungstag und Bekanntmachung des Hinweises auf die Patenterteilung: **16.11.2005**
(21) Anmeldenummer: 03014729.2
(22) Anmeldetag: 27.06.2003
(51) Int. Cl.: G01L 9/00

(54) **Drucksensor**
Pressure sensor
Capteur de pression

(43) Veröffentlichungstag der Anmeldung: 29.12.2004
(73) Patentinhaber: WIKA Alexander Wiegand GmbH & Co.KG, 63911 Klingenberg/Main (DE)
(72) Erfinder: Lohmeier, Franz-Josef, 63897 Miltenberg (DE); Vonau, Uwe, 91126 Schwabach (DE); Ballmann, Joachim, 63916 Amorbach (DE); Pleyer, Jürgen, 63811 Stockstadt (DE); Trützler, Andreas, 63920 Grossheubach (DE); Speier, Niki, 64407 Fränkisch-Grumbach (DE); Fürst, Peter, 63927 Bürgstadt (DE)
(74) Vertreter: TBK-Patent

(56) Entgegenhaltungen:
- EP-A- 0 372 773
- DE-A- 4 008 156
- DE-U- 8 908 951

## Beschreibung

Die Erfindung bezieht sich auf einen Drucksensor mit den Merkmalen des Oberbegriffs von Patentanspruch 1. Ein solcher Drucksensor ist bekannt (DE-U-8908 951).

Der bekannte und der erfindungsgemäße Drucksensor sind dazu bestimmt, an einem Bauteil montiert zu werden, das eine Zuleitung für das Druckfluid aufweist, dessen Druck unter Verwendung des Drucksensors gemessen werden soll. Damit das Druckfluid aus der Zuleitung in die Ausnehmung und somit zur Unterseite der Membran gelangen kann, weist der bekannte Drucksensor die Hülse auf, die mit Hilfe der ringförmigen Scheibe am Gehäuse des Sensorelementes fixiert ist. Ein sich von der ringförmigen Scheibe in die Ausnehmung erstreckender Hülsenabschnitt trägt auf seiner Außenseite den ersten elastomeren Dichtring, der für Abdichtung zwischen der Hülse und der Umfangsfläche der Ausnehmung sorgt. Die Hülse weist einen zweiten Hülsenabschnitt auf, der von der Scheibe in zur Ausnehmung entgegengesetzter Richtung vorsteht. Dieser zweite Hülsenabschnitt trägt auf seiner Außenseite den zweiten elastomeren Dichtring und kann in die Zuleitung des Bauteils, an dem der Drucksensor montiert werden soll, eingesteckt werden. Auf diese Weise sorgen die beiden Dichtringe dafür, dass am Übergang von der Zuleitung in die Hülse und aus der Ausnehmung kein Druckfluid austreten kann.

Das Messprinzip des bekannten und des erfindungsgemäßen Drucksensors basiert darauf, dass die Membran in Abhängigkeit von der Druckhöhe des Druckfluids in der Ausnehmung mehr oder weniger durchgebogen wird. Diese Verformung der Membran wird zu den zu einer Widerstands-Messbrücke geschalteten Widerständen der Widerstandsanordnung übertragen, so dass sich deren Leitfähigkeits- bzw. Widerstandswert ändert. Dadurch ergibt sich als Messsignal die elektrische Querspannung der Widerstands-Messbrücke, die dann in einer nachgeordneten Schaltung verstärkt und zu einem Ausgangssignal des Drucksensors aufbereitet werden kann. Dieses Messprinzip erfordert es, die Membran möglichst frei zu halten von mechanischen Spannungen, die nicht durch den Druck des Druckfluids verursacht sind. Solche mechanische Spannungen würden zu einem verfälschten Messsignal führen, was wiederum Maßnahmen zum Fehlerabgleich notwendig machen würde. Unerwünschte mechanische Belastungen bzw. Verspannungen des Sensorelementes und somit der Membran können insbesondere bei der Montage des Drucksensors an dem mit der Zuleitung versehenen Bauteil auftreten.

Der Erfindung liegt die Aufgabe zugrunde, den gattungsgemäßen Drucksensor dahingehend weiterzubilden, dass Messsignalfehlern möglichst vorgebeugt ist. Insbesondere soll der Drucksensor derart gestaltet sein, dass das Sensorelement und dessen Membran vor mechanischen Verspannungen durch den Montagevorgang am Bauteil mit der Zuleitung und vor mechanischen Verspannungen nach erfolgter Montage geschützt ist.

Diese Aufgabe wird erfindungsgemäß durch den Drucksensor gemäß Patentanspruch 1 gelöst.

Aufgrund der erfindungsgemäßen Ausbildung wird das Sensorelement an seiner einen Grundfläche mittels der zweiten Schulter entgegen der durch den Druck des Druckfluids in der Ausnehmung verursachten Kraft abgestützt und ansonsten lediglich durch den ersten elastomeren Dichtring in Radialrichtung (bezüglich der Achse des Ringes) nachgiebig gehalten. Diese Art der Halterung bzw. Abstützung des Sensorelementes bewirkt, dass das Sensorelement an keiner Stelle einen solchen Kontakt mit einem der übrigen Elemente des Drucksensors hat, dass durch diesen Kontakt das Sensorelement verformende mechanische Kräfte in das Sensorelement eingeleitet werden könnten. Der erfindungsgemäße Drucksensor kann somit vom Anwender auf unkomplizierte Weise montiert werden, ohne dass nach der Montage ein Fehlerabgleich bzw. eine Justage zur Kompensation eines durch Verspannungen verursachten Messsignalfehlers notwendig ist.

Die erfindungsgemäße Ausbildung hat einer Vorteil, dass das Druckfluid nur die Dichtmanschette und das Sensorelement, nicht aber die Hülse berührt. Dies ermöglicht es, die Hülse gegebenenfalls aus einem Werkstoff zu fertigen, der gegenüber dem Druckfluid nicht beständig ist. Ferner ist vorteilhaft, dass der Drucksensor wahlweise montierbar ist an einem Bauteil, dessen Zuleitung durch einen Rohrstutzen gebildet ist, der in die Hülse eingeschoben wird, oder an einem Bauteil, dessen Zuleitung durch eine Bohrung gebildet ist, in die der zweite Hülsenabschnitt geschoben wird. Im letztgenannten Fall sorgt der zweite Dichtring für Abdichtung zwischen der Hülse und der Zuleitung, und im erstgenannten Fall sorgt der dritte Dichtring für Abdichtung zwischen der Hülse und der Zuleitung.

Vorteilhafte Ausgestaltungen der Erfindung sind in den Unteransprüchen definiert und ergeben sich darüber hinaus aus der Beschreibung der Ausführungsbeispiele.

Ausführungsbeispiele der Erfindung sind in den Zeichnungen dargestellt und werden im folgenden näher erläutert. Es zeigen:
Figur 1 einen Längsschnitt durch eine Ausführungsform des erfindungsgemäßen Drucksensors;
Figur 2 den Drucksensor gemäß Figur 1 im montierten Zustand gemäß einer ersten Variante;
Figur 3 den Drucksensor gemäß Figur 1 im montierten Zustand gemäß einer zweiten Variante; und
Figur 4 ein Längsschnitt durch eine zweite Ausführungsform eines Dichtungselementes.

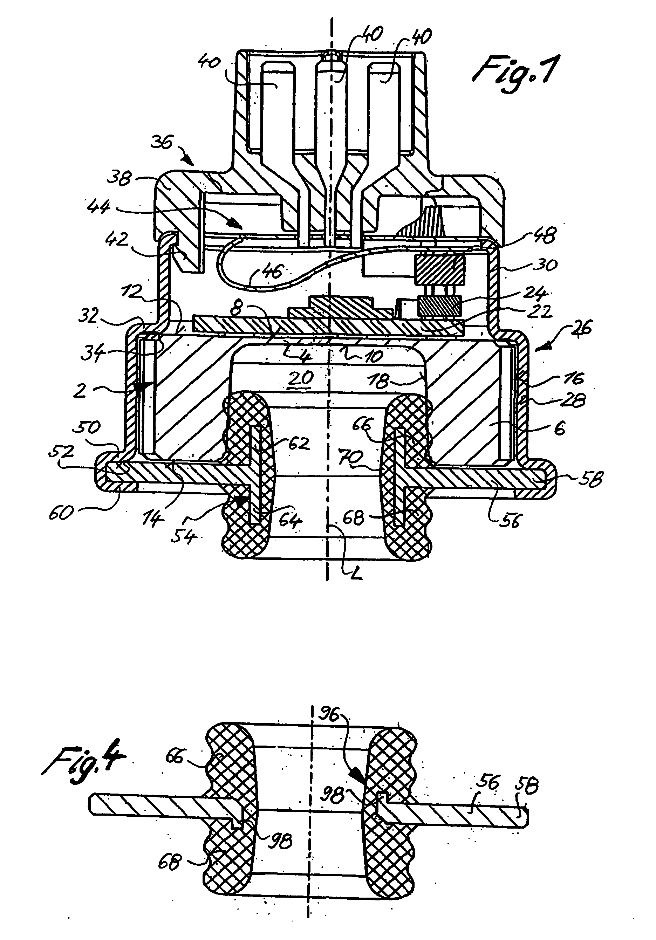

Bei der folgenden Erläuterung der Figuren 1 bis 4 beziehen sich die Begriffe "oben", "oberhalb" und ähnliche Begriffe auf in den Figuren oben bzw. oberhalb angeordnete Elemente und beziehen sich die Begriffe "unten", "unterhalb" und ähnliche Begriffe auf in den Figuren unten bzw. unterhalb angeordnete Elemente.

Der in Figur 1 dargestellte Drucksensor umfasst ein Sensorelement 2, das durch eine flache Membran 4 und einen hohlzylindrischen Ring 6 gebildet ist. Die Membran 4 hat eine im wesentlichen ebene Oberseite 8 und eine dazu parallele Unterseite 10 und geht an ihrem radial außen liegenden Rand über in den Ring 6, wobei die Oberseite 8 der Membran 4 koplanar mit der einen, in Figur 1 oben am Ring 6 ausgebildeten Grundfläche 12 des kreiszylindrischen Ringes 6 angeordnet ist. Die ebene, andere Grundfläche 14 des Ringes 6 ist an diesem unten ausgebildet. Der Ring 6 weist eine radial äußere Mantelfläche 16 auf, die im Wesentlichen eine kreiszylindrische Fläche ist. Ferner weist der Ring 6 eine radial innere Mantelfläche 18 auf, die beim dargestellten Ausführungsbeispiel kreiskegelförmig gestaltet ist, wobei ihr Durchmesser in Richtung nach oben geringer wird. Die Abweichung der kreiskegeligen inneren Mantelfläche 18 von der kreiszylindrischen Form ist allerdings gering, und die innere Mantelfläche 18 kann alternativ auch eine kreiszylindrische Fläche sein.

Aufgrund der vorstehend beschriebenen Geometrie des Sensorelementes 2 weist dieses eine mittige Ausnehmung 20 auf, deren Bodenfläche durch die Unterseite 10 der Membran 4 gebildet ist und deren Umfangsfläche durch die innere Mantelfläche 18 des Ringes 6 gebildet ist. Diese Ausnehmung ist in Betrieb mit einem Druckfluid gefüllt, dessen Druck unter Verwendung des Drucksensors gemessen werden soll. Wenn der Drucksensor, wie im dargestellten Fall, zur Messung von Überdruck eingesetzt werden soll, ist die Oberseite 8 der Membran dem atmosphärischen Druck ausgesetzt. Wenn der Drucksensor, abweichend vom dargestellten Fall, zur Messung von Absolutdruck eingesetzt werden soll, kann vorgesehen sein, dass der Zwischenraum zwischen der Hybridschaltung 22 und der Membran 6 am Rand der Hybridschaltung 22 mittels eines nicht dargestellten ringförmigen Vergusses abgedichtet und evakuiert ist. Unabhängig davon, ob eine Überdruckmessung oder eine Absolutdruckmessung erfolgen soll, herrscht je nach der Druckhöhe des Druckfluids in der Ausnehmung 20 eine Druckdifferenz zwischen der Oberseite 8 und der Unterseite 10 der Membran 4, die dazu führt, dass die Membran nach oben (bei positivem Überdruck oder Absolutdruckmessung) oder nach unten (bei negativem Überdruck) durchgebogen wird.

Das Sensorelement 2, dessen Membran 4 und Ring 6 einstückig miteinander ausgebildet sind, besteht aus einem auf den Anwendungsfall, d.h. auf die Art des Druckfluids und den Druckmessbereich, abgestimmten Werkstoff. Besonders geeignet ist ein Keramikwerkstoff, beispielsweise Aluminiumoxidkeramik (Al₂O₃). Dieser Werkstoff zeichnet sich durch gute federelastische Eigenschaft aus und ist fast hysteresefrei. Das Sensorelement 2 des erfindungsgemäßen Drucksensors ist daher vorzugsweise ein Keramik-Sensorelement.

Auf der Oberseite 8 der Membran 4 ist eine nicht dargestellte Widerstandsanordnung aus elektrischen Widerständen befestigt. Diese Widerstände können durch Dehnungsmessstreifen oder auch durch Dickschicht- oder Dünnschichtwiderstände gebildet sein und sind zu einer Messbrücke geschaltet. Wenn die Membran 4 in Abhängigkeit vom in der Ausnehmung 20 wirkenden Druck verformt wird, werden die elektrischen Widerstände der Widerstandsanordnung ebenfalls verformt, so dass sich deren Leitfähigkeit ändert. Die Widerstandsanordnung wird mit elektrischer Spannung gespeist, und in Abhängigkeit von der Verformung der Membran 4 und der Widerstände liefert die Widerstandsanordnung in an sich bekannter Weise ein elektrisches Messsignal, das als elektrische Querspannung der Widerstands-Messbrücke abgenommen werden kann.

Oberhalb des Sensorelementes 2 ist auf diesem eine elektronische Hybridschaltung 22 angebracht, die elektrisch mit der Widerstandsanordnung verbunden ist und dazu dient, die Widerstandsanordnung mit elektrischer Spannung zu speisen und das von der Widerstandsanordnung gelieferte Messsignal zu verstärken. Zu den Bauelementen der Hybridschaltung 22 gehört eine auf der Oberseite der Hybridschaltung 22 angeordnete Stiftleiste 24.

Das Sensorelement 2 und die Hybridschaltung 22 sind innerhalb eines Gehäuses 26 angeordnet, das oben und unten offen ist. Das Gehäuse 26 umfasst einen kreiszylindrischen ersten Abschnitt 28 sowie einen kreiszylindrischen zweiten Abschnitt 30, der einen kleineren Durchmesser als der erste Abschnitt 28 hat, wobei diese beiden Abschnitte über einen flachen Ringabschnitt 32 miteinander verbunden sind. Die gemeinsame Mittellinie L der kreiszylindrischen Abschnitte 28 und 30 definiert die Axialrichtung des Gehäuses 26 und des gesamten Drucksensors, und die von der Mittellinie L ausgehenden Radien definieren die Radialrichtung des Gehäuses und des gesamten Drucksensors. Auf der Innenseite des Gehäuses 26 bildet der flache Ringabschnitt 32 eine Schulter 34, die beim dargestellten Ausführungsbeispiel eine umlaufende, kreisringförmige Schulter ist. Auf dieser Schulter 34 sitzt das Sensorelement 2 mit dem äußeren Rand seiner oberen Grundfläche 12. Zwischen dem zylindrischen Abschnitt 28 des Gehäuses 26 und der äußeren Mantelfläche 16 des Ringes 6 befindet sich ein Zwischenraum, der sich über die gesamte Höhe und den gesamten Umfang des Ringes 6 erstreckt, so dass die äußere Mantelfläche 16 des Ringes 6 nicht mit dem Gehäuse 26 in Berührung steht.

Am oberen Ende des Gehäuses 26 ist eine Anschlussbaugruppe 36 angeordnet. Die Anschlussbaugruppe 36 besteht im wesentlichen aus einem Deckel 38 und elektrischen Anschlusselementen, die beim dargestellten Ausführungsbeispiel durch drei Steckerstifte 40 gebildet sind. Der Deckel 38 ist ein spritzgegossenes Kunststoffteil, und die Steckerstifte 40 sind in den Deckel eingegossen. Der Deckel 38 überdeckt das offene obere Ende des Gehäuses 26, hat einen Außendurchmesser, der ungefähr gleich dem Außendurchmesser des zweiten Abschnitts 30 des Gehäuses 26 ist und sitzt auf dem oberen Rand des Gehäuses 26, wie dies in Figur 1 dargestellt ist. Der Deckel 38 der Anschlussbaugruppe 36 ist am Gehäuse 26 mittels einer Rastverbindung fixiert, von deren Rasthaken 42 in Figur 1 lediglich einer gezeigt ist. Die Rasthaken 42 hintergreifen den nach innen gebogenen oberen Rand des Gehäuses 26.

Zwischen dem Rand des Deckels 38 und dem oberen Rand des Gehäuses 26 ist eine flexible Leiterplatte 44 eingeklemmt, die mit den Steckerstiften 40 elektrisch kontaktiert ist und die einen streifenförmigen Abschnitt 46 aufweist, an dessen freiem Ende ein Stecker 48 befestigt ist, der auf die Stiftleiste 24 gesteckt ist. Über die Leiterbahnen der flexiblen Leiterplatte 44, den Stecker 48, die Stiftleiste 24 und die Hybridschaltung 22 sind die Steckerstifte 40 der Anschlussbaugruppe 36 elektrisch mit der Widerstandsanordnung verbunden, so dass das Ausgangssignal des Drucksensors an den Steckerstiften 40 vorliegt und über diese einer nicht dargestellten Auswerteschaltung zugeführt werden kann. Die flexible Leiterplatte 44 kann mit nicht dargestellten elektronischen Bauelementen bestückt sein, mit deren Hilfe eine zusätzliche Signalverarbeitung erfolgt und/oder für EMV-Sicherheit gesorgt wird.

Am unteren Ende des ersten Abschnitts 28 des Gehäuses 26 ist radial außen ein weiterer flacher Ringabschnitt 50 angeformt, dessen Unterseite eine Schulter 52 bildet, die beim dargestellten Ausführungsbeispiel eine umlaufende kreisringförmige Schulter ist. Die Schulter 52 ist im Bereich der unteren Grundfläche 14 des Ringes 6 etwas unterhalb der Grundfläche 14 angeordnet.

Der Drucksensor umfasst ferner eine Hülse 54, die in die Ausnehmung 20 hineinragt und beim dargestellten Ausführungsbeispiel eine kreiszylindrische Form hat. Die Hülse 54 ist ungefähr in ihrer axialen Mitte fest und starr verbunden mit einer flachen, ringförmigen Scheibe 56, die die Hülse 54 radial außen umgibt. Die Scheibe 56 erstreckt sich radial nach außen soweit, dass sie mit ihrem radial äußeren Rand 58 bis zur Schulter 52 ragt und auf dieser aufsitzt. An die Schulter 52 bzw. den Ringabschnitt 50 schließt sich ein unterer Gehäuserand 60 des Gehäuses 26 an, der in in Figur 1 dargestellter Weise umgebördelt ist, so dass er den äußeren Rand 58 der Scheibe 56 umgreift und gegen die Schulter 52 spannt. Auf diese Weise ist die Scheibe 56 am Gehäuse befestigt, und zwar in der Weise, dass sie sich relativ zum Gehäuse 26 weder in Axialrichtung, noch in Radialrichtung bewegen kann. Da die Schulter 52 etwas weiter unten liegt als die untere Grundfläche 14 des Ringes 6 des Sensorelementes 2, ist zwischen der unteren Grundfläche 14 und der Oberseite der Scheibe 56 ein Zwischenraum vorhanden, so dass sich der Ring 6 und die Scheibe 56 auf der gesamten Grundfläche 14 nicht berühren.

Da die Hülse 54 ungefähr in ihrer axialen Mitte mit der Scheibe 56 verbunden ist, weist sie einen von der einen Seite der Scheibe 56 aus in die Ausnehmung 20 vorstehenden ersten Hülsenabschnitt 62 sowie einen von der anderen Seite der Scheibe 56 nach unten vorstehenden zweiten Hülsenabschnitt 54 auf. Zwischen der Außenseite des ersten Hülsenabschnittes 62 und der durch die innere Mantelfläche 18 gebildeten Umfangsfläche der Ausnehmung 20 ist ein ringförmiger Zwischenraum vorhanden, so dass sich der erste Hülsenabschnitt 62 und die Umfangsfläche der Ausnehmung 20 nicht berühren. In diesem Zwischenraum ist ein erster elastomerer Dichtring 66 angeordnet, der beispielsweise aus einem Polymerkunststoff besteht. Der Dichtring 66 stützt sich radial innen auf der Außenseite des ersten Hülsenabschnitts 62 ab und liegt mit seiner radial äußeren Oberfläche dichtend an der inneren Mantelfläche 18 an, so dass aus der Ausnehmung 20 Druckfluid zwischen der Hülse 54 und dem Ring 56 nicht austreten kann.

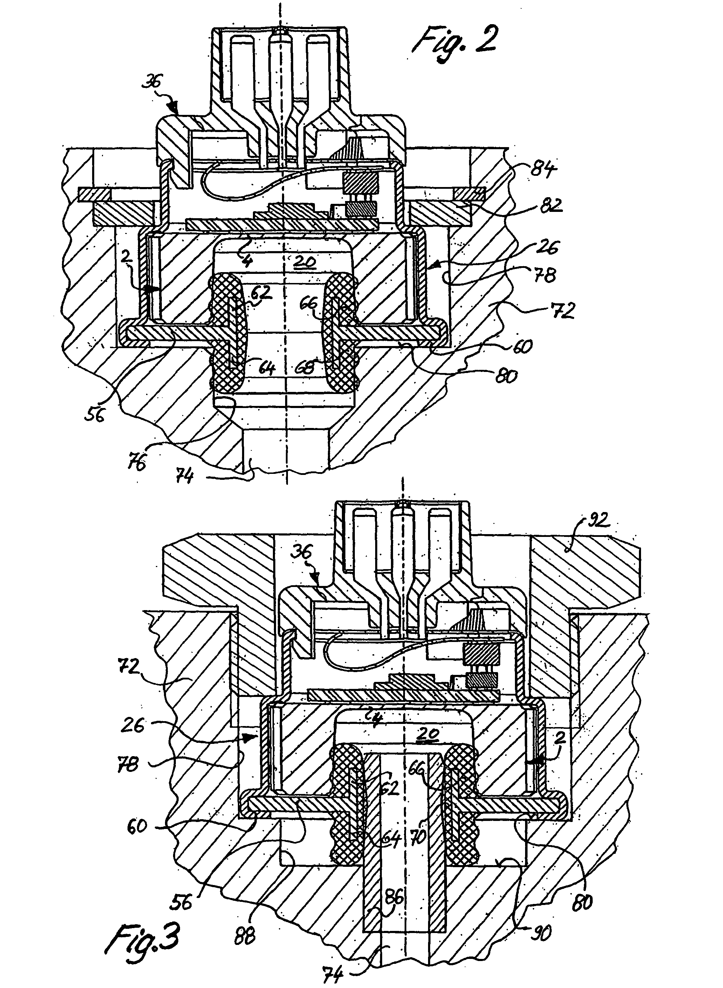

Auf der Außenseite des zweiten Hülsenabschnitts 64 ist ein zweiter elastomerer Dichtring 68 angeordnet, der ebenfalls vorzugsweise aus einem Polymerkunststoff besteht. Der zweite Dichtring 68 dient dazu, an einer Zuleitung, aus der das Druckfluid in die Ausnehmung 20 zugeführt wird, abzudichten, wenn der Drucksensor an einem Bauteil montiert ist, wie dies im folgenden noch unter Bezugnahme auf Figur 2 erläutert werden wird.

Ferner trägt die Hülse 54 einen dritten elastomeren Dichtring 70, der ebenfalls vorzugsweise aus Polymerkunststoff besteht. Der dritte Dichtring 70 ist auf der Innenseite der Hülse 54 angebracht und dient bedarfsweise ebenso wie der zweite Dichtring 68 zum Abdichten an einer Zuleitung für das Druckfluid.

Eine Besonderheit der in Figur 1 dargestellten Ausführungsform besteht darin, dass der erste Dichtring 66, der zweite Dichtring 68 und der dritte Dichtring 70 einstückig miteinander ausgebildet sind und ineinander übergehen, so dass sie gemeinsam eine schlauchförmige Dichtmanschette bilden, die die gesamte Hülse 54 umschließt, wie dies in Figur 1 gezeigt ist. Dies hat zur Folge, dass das Druckfluid mit der Hülse 54 nicht in Berührung kommen kann, so dass die Hülse 54 gegebenenfalls aus einem Werkstoff gefertigt werden kann, der gegenüber dem Druckfluid nicht beständig ist.

Beim dargestellen Ausführungsbeispiel sind die Hülse 54 und die Scheibe 56 einstückig als spritzgegossenes Kunststoffteil ausgebildet, so dass die Hülse 54 und die Scheibe 56 starr miteinander verbunden sind. Alternativ können die Hülse 54 und die Scheibe 56 einstückig als druckgegossenes Metallteil ausgebildet sein. Die gesamte Manschette, die aus den drei Dichtringen 66, 68 und 70 besteht, ist an der Hülse 54 und der Scheibe 56 angespritzt, so dass die Manschette, die Hülse 54 und die Scheibe 56 ein zusammenhängendes Dichtungselement bilden, das durch die Hülse 54 und die Scheibe 56 versteift ist. Dieses Dichtungselement kann gegebenenfalls in einem Spritzvorgang als Vollkunststoffteil nach dem Zweikomponenten-Spritzgießverfahren hergestellt werden.

In Figur 1 - und auch in den Figuren 2 und 3 - sind die drei Dichtringe 66, 68 und 70, die die Dichtmanschette bilden, im entspannten Zustand dargestellt, um die Oberflächengestalt der drei Dichtringe zu zeigen. Die radial äußeren Oberflächen des ersten Dichtringes 66 und des zweiten Dichtringes 68 haben im in Figur 1 gezeigten Längsschnitt, in dessen Schnittebene die Mittellinie L sowie die Längsachse der Hülse 54 liegen, ein wellenartiges Profil, so dass jede dieser Oberflächen durch umlaufende Wulste und umlaufende Ausnehmungen bzw. Vertiefungen gebildet ist, die abwechselnd aufeinander folgen. Diese Ausbildung hat eine besonders effektive Dichtwirkung zur Folge. Abweichend von der Darstellung in Figur 1 sind die Wulste am ersten Dichtring in Wahrheit flachgedrückt und dringen sie nicht in die innere Mantelfläche 18 des Ringes 6 ein, wenn der erste Dichtring 66 seine Position zwischen dem ersten Hülsenabschnitt 62 und der durch die innere Mantelfläche 18 gebildeten Umfangsfläche der Ausnehmung 20 einnimmt.

Aus der vorstehenden Beschreibung ergibt sich, dass das Sensorelement 2 ausschließlich von der Schulter 34 am Ringabschnitt 32 und dem ersten Dichtring 66 getragen und abgestützt wird. Wegen des Zwischenraumes zwischen der unteren Grundfläche 14 und der Scheibe 56 können über die untere Grundfläche 14 keine Kräfte in das Sensorelement eingeleitet werden. Wegen des Zwischenraumes zwischen der äußeren Mantelfläche 14 des Ringes 6 und dem ersten Abschnitt 28 des Gehäuses 26 können über die äußere Mantelfläche 16 ebenfalls keine Kräfte in das Sensorelement eingeleitet werden. In Radialrichtung hat das Sensorelement 2 sogar eine gewisse Beweglichkeit, da es radial nur vom ersten Dichtring 66 abgestützt wird. Diese Art der Halterung und Abstützung des Sensorelementes 2 kann als "schwimmende Lagerung" bezeichnet werden und sorgt dafür, dass Kräfte, die zu mechanischen Verspannungen des Sensorelementes 2 führen könnten, nicht zum Sensorelement 2 gelangen können bzw. von diesem ferngehalten werden.

Figur 2 zeigt eine von mehreren Möglichkeiten, wie der Drucksensor gemäß Figur 1 an einem Bauteil 72 montiert bzw. in dieses eingebaut werden kann. Das Bauteil 72 weist eine Zuleitung 74 auf, die das Druckfluid führt, dessen Druck mittels des Drucksensors gemessen werden soll. Die Zuleitung 74 ist als Bohrung im Bauteil 72 ausgebildet und weist einen erweiterten Endabschnitt 76 auf. Der Endabschnitt 76 mündet in eine koaxiale Bohrung 78, die als Aufnahmebohrung für den Drucksensor dient. Am Übergang zwischen dem erweiterten Endabschnitt 76 und der Bohrung 78 befindet sich eine ringförmige Stützfläche 80.

Der Drucksensor ist in die Bohrung 78 derart eingesetzt, dass der zweite Hülsenabschnitt 64 und der von diesem getragene zweite Dichtring 68 derart in den erweiterten Endabschnitt 76 nach unten vorstehen, dass die radial äußere Oberfläche des zweiten Dichtringes 68 dichtend an der radial inneren Oberfläche des erweiterten Endabschnitts 76 anliegt. Zugleich sitzt die Unterseite des umgebördelten Gehäusesrandes 60 auf der Stützfläche 80 auf. In dieser Einbaulage wird der Drucksensor mit Hilfe einer ringförmigen Stützscheibe 82 gehalten, die mittels eines Sicherungsringes 84 am Bauteil 72 fixiert ist. Dabei sitzt die Stützscheibe 82 mit ihrem radial inneren Rand auf der Oberseite des flachen Ringabschnitts 32 so auf, dass die Unterseite des umgebördelten Gehäuserandes 60 gegen die Stützfläche 80 am Bauteil 72 gedrückt wird. Dies heißt mit anderen Worten, dass das Gehäuse 26 des Drucksensors zwischen der Stützfläche 80 und dem unteren Rand der Stützscheibe 82 eingespannt und dadurch am Bauteil 72 fixiert ist. Die dabei auftretenden, in Axialrichtung des Drucksensors wirkende Spannkräfte werden vom Gehäuse 26 aufgenommen und gelangen nicht zum Sensorelement 2, so dass dieses vor durch axiale Verspannungen verursachten Verformungen geschützt ist.

Über den zweiten Dichtring 68 zum Hülsenabschnitt 64 übertragene radiale und gegebenenfalls axiale Kräfte werden von der Scheibe 56 aufgenommen und in das Gehäuse 26 eingeleitet. Dadurch werden diese Kräfte weitgehend ferngehalten vom ersten Dichtring 66, so dass durch den Einbau- bzw. Montagevorgang im Bereich des ersten Dichtrings 66 keine Radialkräfte verursacht werden, die den Ring 6 des Sensorelementes 2 in unerwünschter Weise deformieren könnten. Dies heißt mit anderen Worten, dass die beiden Dichtungspartien, nämlich die Dichtungspartie zwischen dem ersten Dichtring 66 und der inneren Mantelfläche 18 einerseits und die Dichtungspartie zwischen dem zweiten Dichtring 68 und der Oberfläche des erweiterten Endabschnitts 76 am Bauteil 72 andererseits, voneinander mechanisch entkoppelt sind. Das Sensorelement 2 und dessen Membran 4 sind somit weitgehend vor mechanischen Verspannungen durch den Montagevorgang am Bauteil 72 geschützt.

Figur 3 zeigt eine weitere Möglichkeit der Montage des Drucksensors gemäß Figur 1 am Bauteil 72. Das Bauteil 72 weist die als Aufnahmebohrung für den Drucksensor dienende Bohrung 78 auf, die an ihrem unteren Ende über die Stützfläche 80 in einen Bohrungsabschnitt 88 mit kleinerem Durchmesser übergeht, der an seinem unteren Ende durch eine Bodenfläche 90 begrenzt ist. Wie bei der Variante gemäß Figur 2 sitzt der Drucksensor mit der Unterseite des umgebördelten Gehäuserandes 60 auf der Stützfläche 80 auf. Statt der Stützscheibe 82 und des Sicherungsringes 84 der ersten Variante gemäß Figur 2 ist bei der zweiten Variante gemäß Figur 3 eine mit einem Außengewinde versehene Überwurfmutter 92 vorgesehen, die in die Bohrung 78 geschraubt ist und mit ihrer Unterseite an der Oberseite des Ringabschnittes 32 des Gehäuses 26 angreift, so dass der Drucksensor auf diese Weise am Bauteil 72 festgespannt ist. Die dabei auftretenden Axialkräfte werden wie bei der ersten Variante gemäß Figur 2 vom Sensorelement 2 ferngehalten.

Bei der Variante gemäß Figur 3 ist das Ende der Zuleitung 74 durch einen Rohrstutzen 86 gebildet, der von der Bodenfläche 90 aus mittig nach oben vorsteht. Während der Drucksensor im Zuge der Montage am Bauteil 72 in die Bohrung 78 eingeführt wird, werden die Hülse 54 und der von ihr getragene dritte Dichtring 70 auf den Rohrstutzen 86 geschoben, so dass der dritte Dichtring 70 dichtend an der Außenseite des Rohrstutzens 86 anliegt. Die dabei auftretenden, vom Rohrstutzen 86 auf die dritte Dichtung 70 ausgeübten Radialkräfte werden von der Hülse 54 aufgenommen und über die Scheibe 56 zum Gehäuse 26 übertragen. Dabei sorgt die Hülse 54 dafür, dass diese Radialkräfte nicht in nennenswertem Ausmaß auf den ersten Dichtring 66 einwirken können, so dass wiederum der Ring 6 des Sensorelementes 2 von mechanischen Verspannungen bzw. Belastungen durch den Montagevorgang und nach der Montage freigehalten wird. Auch dann, wenn wie bei der Variante gemäß Figur 3 die Abdichtung am Bauteil 72 mittels des dritten Dichtringes 70 erfolgt, sind wiederum die beiden Dichtungspartien mechanisch voneinander entkoppelt, nämlich die Dichtungspartie zwischen dem ersten Dichtring 66 und der inneren Mantelfläche 18 einerseits und die Dichtungspartie zwischen dem dritten Dichtring 70 und der Außenfläche des Rohrstutzens 86 andererseits.

Die Erfindung ist nicht auf die vorstehend beschriebenen Einzelheiten des Drucksensors und der beiden Montagevarianten gemäß den Figuren 2 und 3 beschränkt. Wesentlich für die Erfindung ist, dass durch die Gestaltung des Drucksensors dessen Sensorelement 2 und Membran 4 von mechanischen Belastungen freigehalten werden, die bei der Montage des Drucksensors am Bauteil 72 auftreten.

Bei dem vorstehend beschriebenen Ausführungsbeispiel des Drucksensors ist dessen Gehäuse 26 ein tiefgezogenes Metallbauteil. Das Gehäuse 26 kann jedoch auch durch ein anderes Herstellungsverfahren als Tiefziehen aus Metall hergestellt werden, kann auch mehrteilig sein und kann alternativ als spritzgegossenes Kunststoffteil ausgebildet sein. Ferner kann die Gestaltung der Anschlussbaugruppe 36 von der in den Zeichnungen dargestellten abweichen. Gestaltung und Ausbildung der Hybridschaltung 22 richten sich nach dem jeweiligen Andwendungsfall des Drucksensors. Die flexible Leiterplatte 44 kommt vorzugsweise zur Anwendung, ist jedoch ein optionales Element.

Figur 1 zeigt die gegenwärtig bevorzugte Ausführungsform des aus den drei Dichtringen 66, 68 und 70, der Hülse 54 und der Scheibe 56 bestehenden Dichtungselementes. Das Dichtungselement kann jedoch auch anders als in den Figuren 1 bis 3 dargestellt gestaltet sein.

Figur 4 zeigt im Längsschnitt eine zweite Ausführungsform des Dichtungselementes. Diese Ausführungsform kann dann vorgesehen werden, wenn wie bei der Montagevariante gemäß Figur 2 der zweite Dichtring 68 mit seiner radial äußeren Oberfläche dichtend an der radial inneren Oberfläche der Zuleitung 74 bzw. der radial inneren Oberfläche des erweiterten Endabschnitts 76 anliegen soll. Bei der Ausführungsform gemäß Figur 4 sind der erste elastomere Dichtring 66 und der zweite elastomere Dichtring 68 wie bei dem Dichtungselement des Drucksensors gemäß Figur 1 einstückig miteinander ausgebildet, so dass sie ineinander übergehen und gemeinsam eine schlauchförmige Dichtmanschette bilden. Dabei ist auch die Hülse einstückig mit den beiden Dichtringen 66 und 68 ausgebildet, so dass sich eine Dichteinheit 96 ergibt, bei der die beiden Dichtringe 66 und 68 einerseits und die Hülse andererseits unmittelbar ineinander übergehen und nicht separate und aneinander fixierte Elemente bilden. Diese Dichteinheit 96 kann daher angesehen werden als Hülse mit doppelter Dichtfunktion, nämlich mit einer Dichtfunktion im Bereich des durch den ersten Dichtring 66 gebildeten Abschnitts der Hülse und einer Dichtfunktion im Bereich des durch den zweiten Dichtring 68 gebildeten Abschnitts der Hülse.

Alternativ kann die Dichteinheit 96 angesehen werden als Doppel-Dichtring mit einem durch den ersten Dichtring 66 gebildeten ersten Abschnitt und einem durch den zweiten Dichtring 68 gebildeten zweiten Abschnitt.

Die Dichteinheit 96 weist ungefähr in ihrer axialen Mitte eine umlaufende Nut auf, in die die Scheibe 56 mit ihrem inneren Rand eingreift. Am inneren Rand der Scheibe 56 können in Axialrichtung vorstehende Zähne 98 angeformt sein, die zur Verbesserung der Verankerung der Dichteinheit 96 an der Scheibe 56 dienen und beim dargestellten Ausführungsbeispiel abwechselnd von der einen und der anderen Seite der Scheibe 56 vorstehen.

Bei der Ausführungsform des Dichtungselementes gemäß Figur 4 sind der Werkstoff der Dichteinheit 96 und deren Abmessungen derart gewählt, dass die radial äußeren Oberflächen der beiden Dichtringe 66 und 68 hinreichend nachgiebig sind, um sich der jeweils zugeordneten Dichtfläche anschmiegen zu können, und dass andererseits die Dichteinheit 96 hinreichend steif ist, um die radial äußeren Oberflächen der Dichtringe 66 und 68 mit ausreichender Kraft gegen die zugeordnete Dichtfläche drücken zu können. Es hat sich gezeigt, dass auch bei dem Dichtungselement gemäß Figur 4 dann, wenn der Drucksensor wie in Figur 2 eingebaut wird, die beiden im Zusammenhang mit Figur 2 erläuterten Dichtungspartien hinreichend mechanisch voneinander entkoppelt sind, um unerwünschten Deformationen des Ringes 6 des Sensorelementes 2 vorzubeugen.

Eine Hülse 54 ragt in die Ausnehmung 20 und trägt einem ersten elastomeren Dichtring 66, der dichtend an der Umfangsfläche der Ausnehmung 20 angeordnet ist. Ferner trägt die Hülse 54 einen zweiten elastomeren Dichtring 68, der zum Abdichten an einer Zuleitung für Druckfluid dient, die in einem Bauteil ausgebildet ist, an dem der Drucksensor montierbar ist. Die Hülse 54 ist starr verbunden mit einer Scheibe 56, die mit ihrem äußeren Rand 58 an einem Gehäuse 26 befestigt ist, das das Sensorelement 2 umgibt. Während und nach der Montage des Drucksensors am Bauteil auftretende mechanische Kräfte werden über die Hülse 54 und die Scheibe 56 in das Gehäuse 26 eingeleitet, so dass das Sensorelement 2 freigehalten wird von mechanischen Verspannungen, die zu einer unerwünschten Verformung der Membran 4 und somit zu einer Verfälschung des Messsignals führen könnten.

## Patentansprüche

1. Drucksensor, mit
einem Sensorelement (2), das einen im Wesentlichen hohlzylindrischen Ring (6) und eine flache Membran (4) mit einer Oberseite (8) und einer Unterseite (10) aufweist, wobei die Membran (4) an ihrem Rand mit dem Ring (6) fest verbunden ist und im Bereich der einen Grundfläche (12) des Ringes (6) angeordnet ist, so dass das Sensorelement (2) eine von der anderen Grundfläche (14) des Ringes (6) ausgehende, mittige Ausnehmung (20) aufweist, deren Bodenfläche durch die Unterseite (10) der Membran (4) gebildet ist und deren Umfangsfläche durch die innere Mantelfläche (18) des Ringes (6) gebildet ist,
einer Widerstandsanordnung aus elektrischen Widerständen, die auf der Oberseite (8) der Membran (4) derart angebracht sind, dass sich ihre elektrische Leitfähigkeit bei einer Verformung der Membran (4) ändert,
einem Gehäuse (26), in das das Sensorelement (2) eingesetzt ist, wobei das Gehäuse (26) einen zylindrischen Abschnitt (28) aufweist, der die äußere Mantelfläche (16) des Ringes (6) des Sensorelements (2) umgibt, und wobei sich an den zylindrischen Abschnitt (28) des Gehäuses (26) im Bereich der einen Grundfläche (12) des Ringes (6) eine erste Schulter (34) anschließt, auf der der Ring (6) mit seiner einen Grundfläche (12) aufsitzt,
einer Hülse (54), die in die Ausnehmung (20) hineinragt und durch die hindurch ein Druckfluid in die Ausnehmung (20) und zur Unterseite (10) der Membran (4) geleitet werden kann,
einer ringförmigen Scheibe (56), die neben der anderen Grundfläche (14) des Ringes (6) des Sensorelements (2) angeordnet ist und an ihrem inneren Rand mit der Hülse (54) verbunden ist und diese trägt sowie mit ihrem äußeren Rand (58) am Gehäuse (26) befestigt ist,
einem ersten elastomeren Dichtring (66), der auf der Außenseite der Hülse (54) fixiert ist und dichtend an der Umfangsfläche der Ausnehmung (20) anliegt, und
einem zweiten elastomeren Dichtring (68), der auf der Außenseite der Hülse (54) fixiert ist,
wobei der Drucksensor an einem Bauteil (72), das eine Zuleitung (74) für das Druckfluid aufweist, montierbar ist,
**dadurch gekennzeichnet,**
**dass** die Scheibe (56) mit der Hülse (54) fest verbunden ist,
**dass** der erste Dichtring (66), der zweite Dichtring (68) und ein dritter elastomerer Dichtring (70), der auf der Innenseite der Hülse (54) fixiert ist, einstückig miteinander ausgebildet sind, so dass sie gemeinsam eine schlauchförmige Dichtmanschette bilden, die die Hülse (54) umschließt,
**dass** zwischen der anderen Grundfläche (14) des Ringes (6) und der Scheibe (56) ein Zwischenraum vorhanden ist und dass zwischen der äußeren Mantelfläche (16) des Ringes (6) und dem zylindrischen Abschnitt (28) des Gehäuses (26) ein Zwischenraum vorhanden ist, so dass das Sensorelement (2) im Gehäuse (26) nur mittels des ersten Dichtringes (66) und der zweiten Schulter (34) gehalten wird.

2. Drucksensor nach Anspruch 1, **dadurch gekennzeichnet, dass** sich an den zylindrischen Abschnitt (28) des Gehäuses (26) im Bereich der anderen Grundfläche (14) des Ringes (6) eine zweite Schulter (52) anschließt, auf der die Scheibe (56) mit ihrem äußeren Rand (58) aufsitzt.

3. Drucksensor nach Anspruch 2, **dadurch gekennzeichnet, dass** sich an die zweite Schulter (52) ein umgebördelter Gehäuserand (60) anschließt, der den äußeren Rand (58) der Scheibe (56) umgreift und **dadurch** festhält.

4. Drucksensor nach einem der Ansprüche 1 bis 3, **dadurch gekennzeichnet, dass** die Umfangsfläche der Ausnehmung (20) eine kreiszylindrische Fläche ist.

5. Drucksensor nach einem der Ansprüche 1 bis 3, **dadurch gekennzeichnet, dass** die Umfangsfläche der Ausnehmung (20) eine kreiskegelige Oberfläche ist, wobei sich die Ausnehmung (20) in Richtung zu ihrer Bodenfläche verjüngt.

6. Drucksensor nach einem der Ansprüche 1 bis 5, **dadurch gekennzeichnet, dass** der Ring (6) und die Membran (4) einstückig miteinander ausgebildet sind.

7. Drucksensor nach einem der Ansprüche 1 bis 6, **dadurch gekennzeichnet, dass** das Sensorelement (2) aus einem Keramikwerkstoff besteht.

8. Drucksensor nach Anspruch 7, **dadurch gekennzeichnet, dass** der Keramikwerkstoff Al₂O₃ ist.

9. Drucksensor nach einem der Ansprüche 1 bis 8, **dadurch gekennzeichnet, dass** die Hülse (54) und die Scheibe (56) einstückig miteinander ausgebildet sind.

10. Drucksensor nach einem der Ansprüche 1 bis 9, **dadurch gekennzeichnet, dass** die Hülse (54) und die Scheibe (56) aus spritzgießfähigem Kunststoff oder druckgießfähigem Metall bestehen.

11. Drucksensor nach einem der Ansprüche 1 bis 9, **dadurch gekennzeichnet, dass** die Hülse (54) und die Scheibe (56) als Tiefziehteil bzw. Tiefziehteile aus Metallblech gefertigt sind.

12. Drucksensor nach einem der Ansprüche 1 bis 11, **dadurch gekennzeichnet dass** die Scheibe (56) derart mit der Hülse (54) verbunden ist, dass von der einen Seite dar Scheibe (56) ein erster Hülsenabschnitt (62), an dem der erste Dichtring (66) fixiert ist, in die Ausnehmung (20) vorsteht und dass von der anderen Seite der Scheibe (56) ein zweiter Hülsenabschnitt (64) vorsteht, an der der zweite Dichtring (68) fixiert ist.

13. Drucksensor nach einem der Ansprüche 1 bis 12, **dadurch gekennzeichnet, dass** der erste Dichtring (66), der zweite Dichtring (68) und der dritte Dichtring (70) hergestellt werden, indem die Hülse (54) mit einem spritzgießfähigen, elastischen Material umspritzt wird.

14. Drucksensor nach Anspruch 13, **dadurch gekennzeichnet, dass** im Zweikomponenten-Spritzgießverfahren zunächst die Hülse (54) und die Scheibe (56) einstückig aus spritzgießfähigem Kunststoff gespritzt werden und im Anschluss daran die drei Dichtringe (66, 68, 70) einstückig aus einem Polymerkunststoff nachgespritzt werden.

15. Drucksensor nach einem der Ansprüche 1 bis 12, **dadurch gekennzeichnet, dass** der erste Dichtring (66), der zweite Dichtring (68) und die Hülse einstückig miteinander ausgebildet sind.

16. Drucksensor nach einem der Ansprüche 1 bis 15, **dadurch gekennzeichnet, dass** die radial äußere Oberfläche des ersten Dichtringes (66) und/oder des zweiten Dichtringes (68) derart gestaltet ist, dass sie in einem die Längsachse der Hülse (54) einschließenden Längsschnitt ein wellenförmiges Profil hat.

17. Drucksensor nach einem der Ansprüche 1 bis 16, **gekennzeichnet durch** eine elektronische Hybridschaltung (22), die innerhalb des Gehäuses (26) neben der Oberseite (8) der Membran (4) angeordnet ist und zur Speisung der Widerstandsanordnung mit elektrischer Spannung sowie zur Verstärkung des von der Widerstandsanordnung gelieferten Messsignals dient.

18. Drucksensor nach Anspruch 17, **gekennzeichnet durch** einen ringförmigen Verguss zwischen dem radial äußeren Rand der Hybridschaltung (22) und der Oberseite (8) der Membran (4), wobei der ringförmige Verguss den Zwischenraum zwischen der Oberseite (8) der Membran (4) und der Hybridschaltung (22) abdichtet und dieser Zwischenraum evakuiert ist.

19. Drucksensor nach einem der Ansprüche 1 bis 18, **gekennzeichnet durch** eine Anschlussbaugruppe (36), die am Gehäuse (26) fixiert ist und elektrische Anschlusselemente (40) aufweist.

20. Drucksensor nach Anspruch 19, **dadurch gekennzeichnet, dass** die Anschlussbaugruppe (36) einen Deckel (38) umfasst, der das Gehäuse (26) an dessen von der Scheibe (56) abgewandtem Ende abschließt und als Anschlusselemente Steckerstifte (40) trägt.

21. Drucksensor nach Anspruch 20, **dadurch gekennzeichnet, dass** der Deckel (38) am Gehäuse (26) mittels einer Rastverbindung (42) fixiert ist.

22. Drucksensor nach einem der Ansprüche 19 bis 21, **gekennzeichnet durch** eine zwischen der Anschlussbaugruppe (36) und dem Gehäuse (26) eingefügte flexible Leiterplatte (44), über deren Leiterbahnen die Anschlussbaugruppe (36) und die Widerstandsanordnung elektrisch miteinander verbunden sind, gegebenenfalls unter Zwischenschaltung der elektronischen Hybridschaltung (22).

## Claims

1. Pressure sensor with
a sensor element (2) which comprises a substantial hollow cylindrical annulus (6) and a flat diaphragm (4) with a top side (8) and an underside (10), wherein the diaphragm (4) is permanently joined at its rim to the annulus (6) and is arranged in the region of one base (12) of the annulus (6) so that the sensor element (2) has a central recess (20) which extends from the other base (14) of the annulus (6) and whose bottom is formed by the underside (10) of the diaphragm (4) and whose circumferential face is formed by the inner cylindrical face (18) of the annulus (6),
a resistance arrangement consisting of electrical resistors attached to the top side (8) of the diaphragm (4) so that their electrical conductivity changes upon deformation of the diaphragm (4),
a casing (26) into which the sensor element (2) is inserted, the casing (26) having a cylindrical portion (28) which surrounds the outer cylindrical face (16) of the annulus (6) of the sensor element (2) and which is adjoined in the region of the one base (12) of the annulus (6) by a first shoulder (34) on which the one base (12) of the annulus (6) seats,
a sleeve (54) which juts into the recess (20) and through which a pressure fluid can be led into the recess (20) and to the underside (10) of the diaphragm (4),
an annular disc (56) which is juxtaposed to the other base (14) of the annulus (6) of the sensor element (2) and at its inner rim is joined to and carries the sleeve (54), and which is attached by its outer rim (58) to the casing (26),
a first elastomer seal ring (66) which is fixed to the outside of the sleeve (54) and bears tightly on the circumferential face of the recess (20), and
a second elastomer seal ring (68) fixed to the outside of the sleeve (54),
the pressure sensor being mountable on a component (72) that has a conduit (74) for the pressure fluid,
**characterized in that**
the disc (56) is permanently joined to the sleeve (54),
the first seal ring (66), the second seal ring (68), and a third elastomer seal ring (70) which is fixed to the inside of the sleeve (54), are all made in one piece so that together they form a sheath-like seal collar which surrounds the sleeve (54),
there is a gap between the other base (14) of the annulus (6) and the disc (56) and there is a gap between the outer cylindrical face (16) of the annulus (6) and the cylindrical portion (28) of the casing (26), so that the sensor element (2) is held inside the casing (26) only by the first seal ring (66) and the second [sic] shoulder (34).

2. Pressure sensor according to Claim 1, **characterized in that** a second shoulder (52) on which the outer rim (58) of the disc (56) seats adjoins the cylindrical portion (28) of the casing (26) in the region of the other base (14) of the annulus (6).

3. Pressure sensor according to Claim 2, **characterized in that** the second shoulder (52) is adjoined by a beaded casing-rim (60) which clasps and thereby secures the outer rim (58) of the disc (56).

4. Pressure sensor according to any one of Claims 1 to 3, **characterized in that** the circumferential face of the recess (20) is a cylindrical face.

5. Pressure sensor according to any one of Claims 1 to 3, **characterized in that** the circumferential face of the recess (20) is a conical surface, with the recess (20) narrowing towards its bottom.

6. Pressure sensor according to any one of Claims 1 to 5, **characterized in that** the annulus (6) and the diaphragm (4) are made in one piece.

7. Pressure sensor according to any one of Claims 1 to 6, **characterized in that** the sensor element (2) consists of ceramic material.

8. Pressure sensor according to Claim 7, **characterized in that** the ceramic material is Al₂O₃.

9. Pressure sensor according to any one of Claims 1 to 8, **characterized in that** the sleeve (54) and the disc (56) are made in one piece.

10. Pressure sensor according to any one of Claims 1 to 9, **characterized in that** the sleeve (54) and the disc (56) consist of injection-mouldable plastic material or die-castable metal.

11. Pressure sensor according to any one of Claims 1 to 9, **characterized in that** the sleeve (54) and the disc (56) are fabricated from sheet metal as a deep-drawn part or parts.

12. Pressure sensor according to any one of Claims 1 to 11, **characterized in that** the sleeve (54) is joined to the disc (56) with a first sleeve portion (62) to which the first seal ring (66) is fixed jutting into the recess (20) from one side of the disc (56), and a second sleeve portion (64) to which the second seal ring (68) is fixed jutting out from the other side of the disc (56).

13. Pressure sensor according to any one of Claims 1 to 12, **characterized in that** the first seal ring (66), the second seal ring (68) and the third seal ring (70) are produced by injection-moulding an injection-mouldable elastic material around the sleeve (54).

14. Pressure sensor according to Claim 13, **characterized in that** by the two-component injection-moulding technique, the sleeve (54) and disc (56) are initially injection-moulded in one piece from injection-mouldable plastic material, after which the three seal rings (66, 68, 70) are post-injection-moulded in one piece from polymer plastic material.

15. Pressure sensor according to any one of Claims 1 to 12, **characterized in that** the first seal ring (66), the second seal ring (68) and the sleeve are made in one piece.

16. Pressure sensor according to any one of Claims 1 to 15, **characterized in that** the radially outer surface of the first seal ring (66) and/or of the second seal ring (68) is formed so that it has a corrugated profile in a longitudinal section including the longitudinal axis of the sleeve (54).

17. Pressure sensor according to any one of Claims 1 to 16, **characterized by** an electronic hybrid circuit (22) which is arranged inside the casing (26) and juxtaposed to the top side (8) of the diaphragm (4) and serves to supply the resistance arrangement with electrical voltage and also to amplify the measuring signal delivered by the resistance arrangement.

18. Pressure sensor according to Claim 17, **characterized by** an annular fill of sealing compound between the radially outer rim of the hybrid circuit (22) and the top side (8) of the diaphragm (4), the said fill sealing off the gap ― which is evacuated ― between the top side (8) of the diaphragm (4) and the hybrid circuit (22).

19. Pressure sensor according to any one of Claims 1 to 18, **characterized by** a connector module (36) which is fixed to the casing (26) and comprises electrical connection elements (40).

20. Pressure sensor according to Claim 19, **characterized in that** the connector module (36) comprises a cover (38) which closes off the casing (26) at the end facing away from the disc (56) and carries plug pins (40) as connection elements.

21. Pressure sensor according to Claim 20, **characterized in that** the cover (38) is fixed to the casing (26) by means of a snap fastening (42).

22. Pressure sensor according to any one of Claims 19 to 21, **characterized by** a flexible printed circuit board (44) which is interposed between the connector module (36) and the casing (26) and through whose conductor paths the connector module (36) and the resistance arrangement are electrically interconnected, optionally via the electronic hybrid circuit (22).

## Revendications

1. Capteur de pression comprenant :
- un élément de capteur (2) qui présente un anneau (6) essentiellement cylindrique creux et une membrane plate (4) présentant une face supérieure (8) et une face inférieure (10), dans lequel la membrane (4) est reliée fermement sur son bord avec l'anneau (6) et est agencée dans la région d'une des surfaces de base (12) de l'anneau (6) de sorte que l'élément de capteur (2) présente un cavité centrale (20) partant de l'autre surface de base (14) de l'anneau (6) et dont la surface de fond est formée par la face inférieure (10) de la membrane (4) et dont la surface périphérique est formée par la surface enveloppe intérieure (18) de l'anneau (6) ;
- un ensemble de résistances constitué de plusieurs résistances électriques qui sont montées sur la face supérieure (8) de la membrane (4) de sorte que leur conductibilité électrique se modifie lors d'une déformation de la membrane (4) ;
- un boîtier (26) dans lequel est placé l'élément de capteur (2), le boîtier (26) présentant un tronçon cylindrique (28) qui entoure la surface enveloppe (16) de l'anneau (6) de l'élément de capteur (2) et un premier épaulement (34) venant se raccorder au tronçon cylindrique (28) du boîtier (26) dans la région d'une des surfaces de base (12) de l'anneau (6), épaulement sur lequel est posé l'anneau (6) avec une de ses surfaces de base (12) ;
- une douille (54) qui vient s'engager jusque dans la cavité (20) et à travers laquelle un fluide sous pression peut être conduit jusque dans la cavité (20) et vers la face inférieure (10) de la membrane (4) ;
- une rondelle annulaire (56) qui est agencée à côté de l'autre surface de base (14) de l'anneau (6) de l'élément de capteur (2) et qui est reliée sur son bord intérieur avec la douille (54) et qui porte celle-ci, et qui est fixée sur le boîtier (26) par son bord extérieur (58) ;
- une première bague d'étanchéité élastomère (66) qui est fixée sur la face extérieure de la souille (54) et qui vient en contact étanche sur la surface périphérique de la cavité (20) ; et
- une seconde bague d'étanchéité élastomère (68) qui est fixée sur la face extérieure de la souille (54), le capteur de pression pouvant être monté sur un composant (72) qui présente une conduite d'amenée (74) pour un fluide sous pression,
**caractérisé en ce que** :
- la rondelle (56) est reliée fermement à la douille (54) ;
- la première bague d'étanchéité (66), la seconde bague d'étanchéité (68) et une troisième bague d'étanchéité élastomère (70) qui est fixée sur la face intérieure de la souille (54) sont réalisées en un seul tenant l'une avec l'autre de manière à former conjointement une manchette d'étanchéité en forme de tuyau flexible qui entoure la douille (54) ; et
- il existe un interstice entre l'autre surface de base (14) de l'anneau (6) et la rondelle (56), et il existe un interstice entre la surface enveloppe extérieure (16) de l'anneau (6) et le tronçon cylindrique (28) du boîtier (26) de sorte que l'élément de capteur (2) est maintenu dans le boîtier (26) seulement au moyen de la première bague d'étanchéité (66) et du second épaulement (34).

2. Capteur de pression selon la revendication 1, **caractérisé en ce qu'**un second épaulement (52) sur lequel est posé la rondelle (56) avec son bord extérieur (58), vient se raccorder au tronçon cylindrique (28) du boîtier (26) dans la région de l'autre surface de base (14) de l'anneau (6).

3. Capteur de pression selon la revendication 2, **caractérisé en ce qu'**une bordure de boîtier retroussée (60) qui vient coiffer le bord extérieur (58) de la rondelle (56) et qui la maintient par cette occasion, vient se raccorder au second épaulement (52).

4. Capteur de pression selon l'une des revendications 1 à 3, **caractérisé en ce que** la surface périphérique de la cavité (20) est une surface cylindrique droite.

5. Capteur de pression selon l'une des revendications 1 à 3, **caractérisé en ce que** la surface périphérique de la cavité (20) est une surface conique, la cavité (20) s'amincissant en direction de sa surface de fond.

6. Capteur de pression selon l'une des revendications 1 à 5, **caractérisé en ce que** l'anneau (6) et la membrane (4) sont réalisés l'un avec l'autre en un seul tenant.

7. Capteur de pression selon l'une des revendications 1 à 6, **caractérisé en ce que** l'élément de capteur (2) est constitué d'un matériau céramique.

8. Capteur de pression selon l'une des revendications 1 à 7, **caractérisé en ce que** le matériau céramique est Al₂O₃.

9. Capteur de pression selon l'une des revendications 1 à 8, **caractérisé en ce que** la douille (54) et la rondelle (56) sont réalisées l'une avec l'autre en un seul tenant.

10. Capteur de pression selon l'une des revendications 1 à 9, **caractérisé en ce que** la douille (54) et la rondelle (56) sont constituées de matière plastique apte au moulage par injection ou de métal apte au moulage sous pression.

11. Capteur de pression selon l'une des revendications 1 à 9, **caractérisé en ce que** la douille (54) et la rondelle (56) sont fabriquées comme pièces embouties en profondeur ou comme pièces embouties en profondeur à partir d'une tôle de métal.

12. Capteur de pression selon l'une des revendications 1 à 11, **caractérisé en ce que** la rondelle (56) est reliée à la douille (54) de sorte qu'un premier tronçon de douille (62) auquel est fixé la première bague d'étanchéité (66) dépasse dudit un côté de la rondelle (56) jusque dans la cavité (20) et **en ce qu'**un second tronçon de douille (64) auquel est fixé la seconde bague d'étanchéité (68) dépasse de l'autre côté de la rondelle (56).

13. Capteur de pression selon l'une des revendications 1 à 12, **caractérisé en ce que** la première bague d'étanchéité (66), la seconde bague d'étanchéité (68) et la troisième bague d'étanchéité (70) sont fabriquées en enrobant par injection la douille (54) avec un matériau élastique apte au moulage par injection.

14. Capteur de pression selon la revendication 13, **caractérisé en ce que**, dans le procédé de moulage par injection à deux composants, la douille (54) et la rondelle (56) sont tout d'abord injectées en un seul tenant à partir d'une matière plastique apte au moulage par injection et, directement après cela, les trois bagues d'étanchéité (66, 68, 70) sont ensuite injectées en un seul tenant à partir d'une matière plastique polymère.

15. Capteur de pression selon l'une des revendications 1 à 12, **caractérisé en ce que** la première bague d'étanchéité (66), la seconde bague d'étanchéité (68) et la douille sont réalisées l'une avec l'autre en un seul tenant.

16. Capteur de pression selon l'une des revendications 1 à 15, **caractérisé en ce que** la surface extérieure radiale de la première bague d'étanchéité (66) et/ou de la seconde bague d'étanchéité (68) est réalisée de manière à avoir un profil ondulé dans un coupe longitudinale incluant l'axe longitudinal de la douille (54).

17. Capteur de pression selon l'une des revendications 1 à 16, **caractérisé par** un circuit hybride électronique (22) qui est agencé à l'intérieur du boîtier (26) à côté de la face supérieure (8) de la membrane (4) et qui sert à alimenter l'ensemble de résistances en tension électrique ainsi qu'à amplifier le signal de mesure livré par l'ensemble de résistances.

18. Capteur de pression selon la revendication 17, **caractérisé par** un coulage annulaire entre le bord extérieur radial du circuit hybride (22) et la face supérieure (8) de la membrane (4), dans lequel le coulage annulaire étanche l'interstice entre la face supérieure (8) de la membrane (4) et le circuit hybride (22) et dans lequel cet interstice est évacué.

19. Capteur de pression selon l'une des revendications 1 à 18, **caractérisé par** un groupe constitutif de connexion (36) qui est fixé sur le boîtier (26) et qui présente des éléments de connexion électriques (40).

20. Capteur de pression selon la revendication 19, **caractérisé en ce que** le groupe constitutif de connexion (36) comporte un couvercle (38) qui ferme le boîtier (26) sur son extrémité détournée de la rondelle (56) et qui porte des ergots de connexion (40) comme éléments de connexion.

21. Capteur de pression selon la revendication 20, **caractérisé en ce que** le couvercle (38) est fixé sur le boîtier (26) au moyen d'une liaison à encliquetage (42).

22. Capteur de pression selon l'une des revendications 19 à 21, **caractérisé par** une plaque de circuits imprimés flexible (44) insérée entre le groupe constitutif de connexion (36) et le boîtier (26), dont les pistes conductrices servent à relier électriquement le groupe constitutif de connexion (36) et l'ensemble de résistances entre eux, le cas échéant par le branchement intermédiaire du circuit hybride électronique (22).
